Europäisches Patentamt

European Patent Office

Office européen des brevets

(11) Veröffentlichungsnummer: **0 141 087 B1**

## EUROPÄISCHE PATENTSCHRIFT

(45) Veröffentlichungstag der Patentschrift: **22.05.91**

(51) Int. Cl.⁵: **B29B 15/02**, B29C 71/00, //B29K21:00,B29K21:00

(21) Anmeldenummer: **84109593.8**

(22) Anmeldetag: **11.08.84**

(54) **Verfahren zum Behandeln von unvulkanisierten elastomeren Formkörpern oder Halbfabrikaten.**

(30) Priorität: **24.08.83 DE 3330505**
**24.08.83 DE 8324313 U**

(43) Veröffentlichungstag der Anmeldung:
**15.05.85 Patentblatt 85/20**

(45) Bekanntmachung des Hinweises auf die Patenterteilung:
**22.05.91 Patentblatt 91/21**

(84) Benannte Vertragsstaaten:
**AT BE CH DE FR GB IT LI LU NL SE**

(56) Entgegenhaltungen:
**AT-B- 293 902**
**DE-A- 1 809 927**
**US-A- 3 595 950**

**ELIAS, Makromoleküle 1981 S. 1018**

(73) Patentinhaber: **UNIROYAL ENGLEBERT Reifen GmbH**
**Hüttenstrasse 7**
**W-5100 Aachen(DE)**

(72) Erfinder: **Harms, Engelbert G., Dr.-Ing., Dipl.-Ing.**
**Auf dem Anger 11**
**W-5100 Aachen(DE)**
Erfinder: **Schmeitz, Axel Wilhelm M., Dipl.-Ing.**
**Auf dem Anger 25**
**W-5100 Aachen(DE)**
Erfinder: **Thomaschewski, Hubertus Paulus**
**Leibnitzstrasse 9**
**W-5110 Alsdorf(DE)**

## Beschreibung

Die Erfindung betrifft ein Verfahren zum Behandeln der oder mindestens einer Oberfläche von einem unvulkanisierten elastomeren und daher klebrigen Formkörper oder Halbfabrikat mit einen pulver-oder mehlförmigen Trennmittel, das die Klebrigkeit beseitigt.

Die Oberflächen der unvulkanisierten elastomeren Formkörper und Halbfabrikate sind klebrig. Für die Weiterverarbeitung ist dies aus Gründen guter Haftungswirkung einenteils erwünscht; so z.B. wenn Halbfabrikate mit anderen Halbfabrikaten verbunden oder aufeinanderaufgebaut werden, bevor sie vernetzt bzw. vulkanisiert werden.

Diese Klebrigkeit ist anderenteils unerwünscht und störend, wenn solche Halbfabrikate zwischengelagert, verpackt oder transportiert werden sollen, bevor sie mit anderen Teilen verbunden und vulkanisiert werden.
Zum anderen bestehen im Bereich der Herstellungsformen gewisse Entlüftungs-, Ein- und Entformungsprobleme, wenn diese elastomeren Formkörper oder Halbfabrikate vulkanisiert werden sollen.

Um die Klebrigkeit zu beseitigen, werden seit Jahrzehnten verschiedene Trennmittel benutzt, mit denen die klebrige Oberfläche behandelt wird, damit sie abstumpft.

Es ist bekannt, daß die klebrige Oberfläche mit gelöstem Ruß, mit Maismehl oder mit Zinkstearat bestrichen oder bestäubt wurde.

Es ist des weiteren bekannt, daß die klebrige Oberfläche insbesondere bei gelochten Seitenplatten in der Runderneuerung von Fahrzeugreifen mit Gummimehl bestäubt wird. Klebrige Oberflächen werden ferner mit Hartgummistaub oder Rauhmehl bepudert. Solche mehl- bzw. staubförmigen Trennmittel erhält man beim Rauhen und Abschleifen von Gummiteilen bei der Reifenrunderneuerung. Vergleiche dazu das Österreichische Patent Nr. 293 902 sowie die Deutschen Patente Nr. 19 43 876 und 818 419.

Den bekannten mehl- bzw. pulverförmigen, die Klebrigkeit beseitigenden Trennmitteln ist gemein, daß sie Feinteilchen eines vulkanisierten, ausgehärteten Gummiprodukts sind. Die chemischen und physikalischen Eigenschaften unterscheiden sich zum Teil erheblich von denen eines nicht vulkanisierten elastomeren Teiles. Gummimehl ist in diesem Sinne auch in gewisser Weise ein Fremdteilchen in Bezug auf den elastomeren Formkörper oder das elastomere Halbfabrikat. Jede Art von Fremdteilchen im Vergleich zum Elastomeren soll vermieden werden, weil die Homogenität eines jeden beliebigen elastomeren Produkts dadurch ungünstig beeinflußt wird, wenn es vernetzt oder vulkanisiert werden soll.

Es sind ferner feinteilige, hochmolekulare Stoffe als Pudermittel bei der Verarbeitung und Handhabung von Granulaten, Pulvern und unvulkanisierten Formkörpern nach DE-A-1809 927 bekannt, die eine Einfriertemperatur besitzen, die oberhalb der Verarbeitungstemperatur und unterhalb der Vulkanisationstemperatur der zu trennenden Kautschuke oder Kautschukmischungen liegen. Geeignete Polymere sind beispielsweise trans-1,4 Polyisopren, trans-1,4 Polybutadien, Styrol-Butadien-Copolymere mit hohem Styrolgehalt sowie Äthylen-Propylen-Terpolymere. Es handelt sich bei den bekannten Trennmitteln um nicht elastische Substanzen, die wegen geringer Bruchdehnung die Haftung zusammenvulkanisierter Kautschuke ungünstig beeinflussen.

Nach dem Gedanken der Erfindung soll das Verfahren zum Behandeln einer klebrigen elastomeren Oberfläche verbessert werden, indem nicht nur die Klebrigkeit beseitigt, sondern die Qualität der Verbindung zwischen elastomerem Formteil oder Halbfabrikat und einem elastomeren noch nicht vernetzten Formteil oder einem Gummiformteil verbessert wird. Die Verbindung soll homogener werden.

Bei der Klebrigkeitbeseitigung und verbesserten Qualität in der Verbindung soll des weiteren eine geringere Trennmittelmenge ausreichen im Vergleich zu bekannten Mitteln und Maßnahmen.

Erfindungsgemäß wird dies durch unvulkanisierten, in Korporierten oder aufgetrommelten Ruß aufweisenden, durch Polymerisation hergestellten Pulverkautschk erreicht, der als Trennmittel verwendet auf die Oberfläche der unvulkanisierten Formkörper oder Halbfabrikate aufgebracht wird. Er gewährleistet eine hervorragende Abstumpfung der klebrigen Oberfläche, eine Verbesserung in der Qualität der durch Vulkanisieren hergestellten Verbindung, und dies ist außerdem mit einer sehr geringen Menge an Trennmittel erreichbar. Bei perforierten Formkörpern oder Halbfabrikaten wird nach weiteren Merkmalen der Erfindung der unvulkanisierte Pulverkautschuk auf die Oberfläche und die Lochwandungen der Perforationen aufgebracht. Dabei kann entweder der Formkörper oder das Halbfabrikat zuerst perforiert und dann mit Pulverkautschuk abgestumpft oder umgekehrt kann zuerst die Oberfläche abgestumpft und dann perforiert werden.

Nach einer bevorzugten Ausführungsform wird der Pulverkautschuk durch Bestäuben, Pudern oder Bestreichen auf die Oberfläche des Halbfabrikats oder Formkörpers aufgebracht. Bei mit Ruß inkorporiertem Pulverkautschuk wird der Pulverkautschuk gemeinsam mit dem Füllstoff ausgefällt. Bei Pulverkautschuk mit aufgetrommeltem Ruß wird letzterer beispielsweise in einem trommelförmigen Taumelmischer beim Mischen aufgebracht oder auf den klebrigen Pulverkautschuk aufgeblasen.

Das nach der Erfindung erhaltene elastomere Halbfabrikat kennzeichnet sich dadurch aus, daß der Pulverkautschuk auf der Oberfläche aufgebracht oder auf Oberfläche und Lochwänden der Perforationen aufgebracht vorliegt. Dadurch ist eine verbesserte Qualität der Abstumpfung und der nachfolgenden Verbindung mit anderen vergleichbaren Halbfabrikaten durch Vulkanisieren gewährleistet.

Deranspruchsgemäß eingesetzk Pulverkautschuk kann mit verschiedenen Elastomer-, und Weichmacherarten und -mengen vorliegen. Er kann als Pulverbatch, d.i. Pulverkautschukgrundmischung oder als Pulverkautschuk-Fertigmischung vorliegen und angewendet werden. Hierdurch liegt ein universelles Trennmittel vor, bei dem, falls dies notwendig ist, über die Zusammensetzung und Variation der Einzelkomponenten auch auf die physikalischen und chemischen Eigenschaften Einfluß genommen werden kann.

Durch den Pulverkautschuk wird eine qualitative Verbesserung in der Verbindung zwischen den Flächen der vulkanisierten elastomeren Teile erreicht.

In der einfachen Form besteht das Trennmittel aus Pulverkautschuk, bei dem Ruß vorzugsweise während der Polymerisationsphase inkorporiert wurde.

Das Trennmittel wird mit Hilfe einer Auftrag- oder Dosier-Pudervorrichtung auf die abzustumpfende Oberfläche aufgebracht, und gegebenenfalls überschüssiges Trennmittel wird durch eine Bürstenwalze von der Oberfläche wieder entfernt.

Der Pulverkautschuk hat Vorteile gegenüber dem Gummi- bzw. Rauhmehl. Er ist nicht vulkanisiertes Trennmittel. Er ist gleichmäßig in Korngröße und Kornform und zeichnet sich durch hohen Reinheitsgrad aus. Er ist gut lager- und rieselfähig und kann infolgedessen in einer sehr dünnen, wenig dichten, kaum sicht- und fühlbaren Schicht aufgebracht werden. Die geringe gleichmäßige Korngröße sowie dünne Auftragsschicht bewirken bei perforierten oder gelochten unvulkanisierten Halbfabrikaten kein Verstopfen der Löcher. Daher ist jederzeit eine einwandfreie Entlüftung gewährleistet.

Das Trennmittel garantiert, daß der Formkörper auf der Herstellungsformwand gleitet. Verlaufsfehler und Materialverschiebungen werden dadurch vermieden.

Das Trennmittel Pulverkautschuk geht eine hervorragende feste Verbindung mit dem Trägerwerkstoff ein. Eine nachteilige Veränderung in der Oberflächenbeschaffenheit und nachteilige Auswirkungen werden vermieden. Es liegt eine innige homogene Verbindung mit dem Trägerwerkstoff vor. Das vernetzte bzw. vulkanisierte Produkt ist ozonrißbeständig, kerbrißfest und nicht materialermüdend. Der Verbrauch an Trennmittelmenge ist deutlich geringer im Vergleich zu Gummi- bzw. Rauhmehl.

Die mit Pulverkautschuk behandelte klebrige Oberfläche kann glatt und ungelöchert, sie kann strukturiert, sie kann auch perforiert sein. Das Bestäuben mit Pulverkautschuk kann vor oder nach der Perforierung erfolgen.

Anhand von Ausführungsbeispielen ist die Erfindung erläutert. Es zeigen

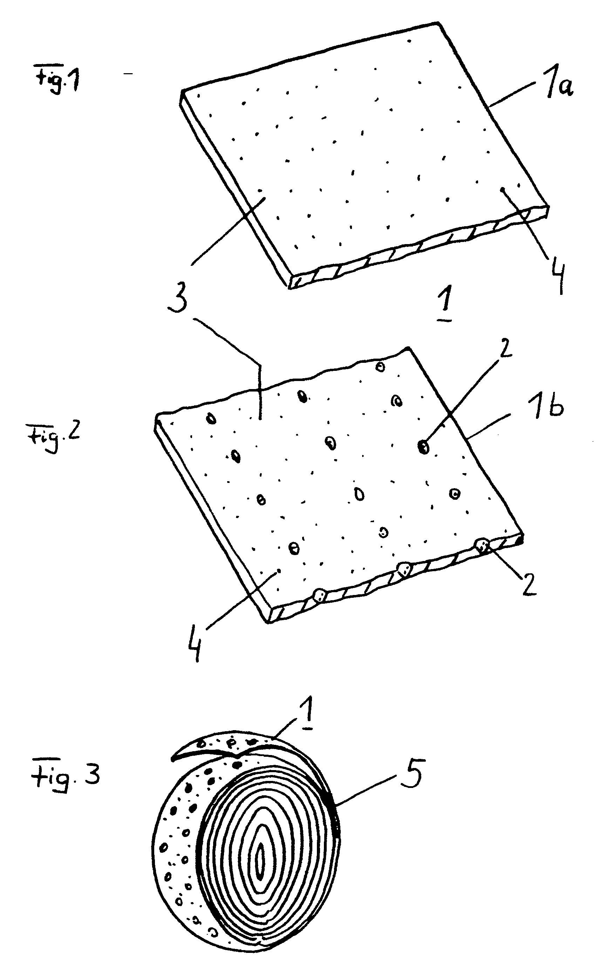

Fig. 1    eine Kautschukplatte mit glatter Oberfläche, räumlich im Ausschnitt dargestellt;

Fig. 2    eine Kautschukplatte mit Lochperforierungen in der Oberfläche, räumlich im Ausschnitt dargestellt;

Fig. 3    einen Kautschukbandwickel, räumlich im Ausschnitt dargestellt.

Halbfabrikate, wie z.B. im Extrusions- oder Kalandrierverfahren hergestellte Profile, Platten 1 oder Bänder aus unvulkanisierten Elastomermischungen weisen stark klebende Oberflächen 3 auf. Diese sind einerseits erwünscht, um eine feste Verbindung zu anderen Produktteilen zu erzielen. Auf der anderen, der dem Fertigprodukt abgekehrten Plattenseite 3 sind sie jedoch störend, weil sie mit unvulkanisierten weiteren Produktteilen oder Formwänden verkleben. Außerdem rufen sie in der Produktform Entlüftungs- und Entformungsprobleme hervor. Sie können zu Produktfehlern und zu Produktausschuß führen.

Daher wird auf die klebende Oberfläche 3 der Platte la und im Falle eines mit Entlüftungsperforierungen 2 versehenen Halbfabrikats 1b oder Wikkels 5 auf die klebrige Oberfläche 3 und auf die Lochwandungen eine bestimmte, wählbare Menge Pulverkautschuk 4 aufgebracht.

Der Pulverkautschuk besteht aus einer elastomeren Komponente oder den elastomeren Komponenten und Ruß in angereicherter, inkorporierter oder aufgetrommelter Form. Der Pulverkautschuk kann in Form des Pulverbatch, d.i. eine Grundmischung, oder einer Fertigmischung als Trennmittel verwendet werden, wobei dann Weichmacher und weitere Zusätze im Trennmittel vorliegen.

Die Zusammensetzung der Einzelkomponenten aus dem Elastomeren und dem Ruß und gffs Weichmachern kann sich nach den physikalischen und chemischen Eigenschaften des elastomeren Halbfabrikats richten, dessen Oberfläche abgestumpft werden soll. Dadurch kann über das Trennmittel gezielt Einfluß auf die durch Vernetzung oder Vulkanisation erfolgende Verbindung elastomerer Teile genommen werden.

Das Trennmittel wird mit Hilfe einer Auftragvorrichtung oder Bepuderungsvorrichtung auf die abzustumpfende Oberfläche aufgebracht. Eine Abbürstvorrichtung, z.B. Bürstenwalze, verteilt gffs zusätzlich die Trennmittelmenge und entfernt überschüssiges Trennmaterial. Die benötigte Trennmittelmenge beträgt im Vergleich zum Gummimehl etwa 1/10 bis 1/6 pro Flächeneinheit der Gummimehlmenge.

Die Anwendung des Pulverkautschuks als Trennmittel erfolgt bei unvulkanisierten elastomeren Halbfabrikaten vor deren Zwischenlagerung und Verbindung mit weiteren unvulkanisierten elastomeren Halbfabrikaten, z.B. Platten, Streifen, Bändern, oder/und bei unvulkanisierten elastomeren Formkörpern, wie z.B. Rohreifen oder Hohlkörpern, Behältern oder anderen Formteilen, insbesondere durch Vulkanisation. Der Pulverkautschuk wird dabei zum einen nur außen oder zum anderen nur innen auf die in Frage stehende Oberfläche aufgebracht. Die Anwendung erfolgt ebenfalls bei unvulkanisierten elastomeren Halbfabrikaten vor deren Zwischenlagerung und Verbindung mit einem Gummiformkörper, z.B. einem runderneuerungsfähigen Reifen, der neue Seitenstreifen und/oder Laufstreifen o.a. Teile erhält, insbesondere durch Vulkanisation.

Die Anwendung des unvulkanisierten Pulverkautschuks als Trennmittel hat folgende Vorteile: er ist sehr gleichmäßig und klein in Korngröße und Kornform und zeichnet sich durch einen hohen Reinheitsgrad aus. Er ist sehr gut lager- und rieselfähig. Er ist daher in einer sehr dünnen, kaum sicht- und fühlbaren Schicht aufzutragen. Dies ist auch nach längerer Lagerung des Pulverkautschuks in gleichem Maße gewährleistet.

Die geringe und gleichmäßige Korngröße und dünne Auftragungsmenge verursachen keine Verstopfung und Entlüftungsbehinderung, weder bei nicht perforierten, noch bei perforierten Halbfabrikaten.

Der Pulverkautschuk geht eine hervorragende innige Verbindung mit dem Trägerwerkstoff ein, so daß nach der Vulkanisation eine homogene Verbindung und sehr gute Oberflächenbeschaffenheit vorliegen. Verbessert wird die Materialermüdungseigenschaft. Verbessert werden auch die Eigenschaften bezüglich Ozonrißbeständigkeit und Kerbrißbildung.

Der Pulverkautschuk ist ein hervorragendes Trennmittel zum Verhindern des Klebens von Produktteilen und er ist ein hervorragendes Formtrennmittel zwischen Formteil und Form.

Der Pulverkautschuk gewährleistet ferner eine gute Gleitfähigkeit an der Formwand und gute Entlüftung. Verlauffehler und Materialverschiebung werden dadurch vermieden. Vorteile ergeben sich des weiteren in Bezug auf einen verringerten Verschmutzungsgrad an und in der Form.

Halbfabrikate werden überlicherweise im Extrusions- oder Kalanderverfahren in Form von Profilplatten und -streifen oder Bändern hergestellt. Die elastomeren bzw. weichmachenden Komponenten bewirken starke Klebrigkeit der Oberflächen. Diese sind erwünscht, um eine feste Verbindung mit anderen Produktbestandteilen zu erzielen, z.B. Konfektion und Vulkanisation in der Reifenrunderneuerung oder Neureifenfertigung. Auf der anderen Seite sind die klebenden Flächen störend, weil sie zum Verkleben insbesondere mit ähnlichen oder gleichartigen Produktteilen oder der Form führen und weil sie Entlüftungs- und Entformungsprobleme hervorrufen. Sie führen zu Ausschuß und/oder zu Produktfehlern, die vermieden werden müssen. Aus diesem Grund wird die unerwünscht klebende Oberfläche abgestumpft. Nach dem Gedanken der Erfindung wird anstelle des bisher üblichen Bestäubens mit Gummimehl, insbesondere mit Rauhmehl oder Bestreichens mit z.B. in wässrigen Lösungen vorliegenden Trennmitteln nun Pulverkautschuk in sehr geringer Menge aufgetragen. Der Grad der Abstumpfung ist sehr hoch im Vergleich zu der üblicher Trennmittel. Der Bedarf an Pulverkautschuk ist jedoch beträchtlich geringer im Vergleich zu Gummimehl. Wichtig ist, daß durch den Pulverkautschuk die Produktqualität verbessert wird, da eine homogene Vernetzung von elastomeren Trägermaterialteilchen und elastomeren Trennmittelteilchen erfolgt. Es kann des weiteren bei der Zusammensetzung der Einzelkomponenten des Pulverkautschuks Einfluß auf die physikalischen und chemischen Eigenschaften des Trägermaterials wie auch weitere Bestandteile der elastomeren Halbfabrikate oder Formkörper genommen werden.

Die Zusammensetzung des unvulkanisierten Pulverkautschuks als Klebrigkeit beseitigendes Trennmittel kann je nach Einsatz gezielt z.B. auf die Zusammensetzung einer Seitenteilplatte oder eines Laufstreifens angepaßt vorgesehen und angewandt werden.

Das Trennmittel wirkt insoweit zunächst abstumpfend und hernach als Verbindung begünstigendes Mittel, insbesondere bei der Vulkanisation.

## Ansprüche

1. Verfahren zum Behandeln der Oberfläche von unvulkanisierten elastomeren Halbfabrikaten oder Formkörpern mit einem pulver- bzw. mehlförmigen Trennmittel, das die Klebrigkeit, beseitigt, gekennzeichnet durch unvulkanisierten, in Korporierten oder aufgetrommelten Ruß aufweisenden, durch Polymerisation hergestellten Pulverkautschuk, der als Trennmittel verwendet auf die Oberfläche aufgebracht wird.

2. Verfahren nach Anspruch 1, bei dem das Halbfabrikat oder der Formkörper perforiert ist, dadurch gekennzeichnet, daß der unvulkanisierte Pulverkautschuk auf die Oberfläche (3) und die Lochwandungen der Perforation (2) aufgebracht wird.

3. Verfahren nach Anspruch 2, dadurch gekennzeichnet, daß das Halbfabrikat (1b) zuerst perforiert und dann mit dem Pulverkautschuk (4) abgestumpft oder umgekehrt zuerst die Oberfläche (3) abgestumpft und dann perforiert wird.

4. Verfahren nach einem der vorhergehenden Ansprüche, dadurch gekennzeichnet, daß der Pulverkautschuk durch Bestäuben, Pudern oder Bestreichen auf die Oberfläche des Halbfabrikats oder Formkörpers aufgebracht wird.

5. Elastomeres Halbfabrikat, behandelt nach einem der Ansprüche 1 bis 4, dadurch gekennzeichnet, daß der Pulverkautschuk auf der Oberfläche aufgebracht oder auf der Oberfläche und den Lochwänden der Perforation aufgebracht vorliegt.

## Claims

1. Method of treating the surface of unvulcanised elastomeric semifinished articles or moulded bodies with a pulverulent or farinaceous parting compound, which eliminates the adhesiveness, characterised by unvulcanised powdered rubber, which includes incorporated or drummed carbon black and is produced by polymerization, the powdered rubber being applied to the surface and being used as a parting compound.

2. Method according to claim 1, wherein the semifinished article or the moulded body is perforated, characterised in that the unvulcanised powdered rubber is applied to the surface (3) and the walls of the perforation holes (2).

3. Method according to claim 2, characterised in that the semifinished article (1b) is initially perforated and then truncated with the powdered rubber (4) or, conversely, the surface (3) is initially truncated and then perforated.

4. Method according to one of the preceding claims, characterised in that the powdered rubber is applied to the surface of the semifinished article or moulded body by means of dusting, powdering or spreading.

5. Elastomeric semifinished article, treated in accordance with one of claims 1 to 4, characterised in that the powdered rubber is applied to the surface or is present, having been applied to the surface and the walls of the perforation holes.

## Revendications

1. Procédé de traitement de la surface de semi-produits ou pièces élastomères non-vulcanisés avec un agent séparateur sous forme de poudre ou de farine qui supprime l'adhérence, caractérisé en ce qu'on emploie comme agent séparateur en le déposant à la surface du caoutchouc en poudre non vulcanisé préparé par polymérisation, avec du noir de fumée incorporé ou introduit avec un tambour.

2. Procédé selon la revendication 1, dans lequel le semi-produit ou la pièce est perforé, caractérisé en ce que le caoutchouc en poudre non vulcanisé est déposé à la surface (3) et sur les parois des trous de la perforation (2).

3. Procédé selon la revendication 2, caractérisé en ce que le semi-produit (1b) est tout d'abord perforé puis émoussé avec du caoutchouc en poudre (4) ou inversement en ce que la surface (3) est tout d'abord émoussée puis perforée.

4. Procédé selon l'une des revendications précédentes, caractérisé en ce que le caoutchouc en poudre est déposé à la surface du semi-produit ou de la pièce par pulvérisation, poudrage ou enduction.

5. Semi-produit élastomère, traité selon l'une des revendications 1 à 4, caractérisé en ce que le caoutchouc en poudre est déposé à la surface ou à la surface et sur les parois des trous de la perforation.

Fig.1

1a

3

4

1

Fig.2

3

2

1b

4

2

2

1

Fig.3

5